# EUROPEAN PATENT SPECIFICATION

(11) **EP 4 141 402 B1**
(45) Date of publication and mention of the grant of the patent: **04.06.2025**
(21) Application number: 21192649.8
(22) Date of filing: 23.08.2021
(51) Int. Cl.: G01M 3/32, G01M 3/22

(54) **STRUCTURAL HEALTH MONITORING METHOD FOR FLUID CONTAINERS**
VERFAHREN ZUR ÜBERWACHUNG DES STRUKTURZUSTANDS VON FLÜSSIGKEITSBEHÄLTERN
MÉTHODE DE SURVEILLANCE DE L'ÉTAT STRUCTUREL DES CONTENEURS DE FLUIDE

(43) Date of publication of application: 01.03.2023
(73) Proprietor: Airbus Operations GmbH, 21129 Hamburg (DE)
(72) Inventor: Daandels, Dort, 21129 Hamburg (DE); Eckstein, Benjamin, 21129 Hamburg (DE)
(74) Representative: KASTEL Patentanwälte PartG mbB

(56) References cited:
- CN-A- 106 840 546
- US-A- 5 225 812
- US-A1- 2006 090 546

## Description

The invention relates to a structural health monitoring method for a fluid container.

Structural health monitoring apparatus and their methods are known from CN 110469772 A, JP 2007 139 143 A, US 2008 / 0 319 688 A1 and CN 1598626 A. Usually a sensor is embedded in a wall of the container. Fluid diffusing into the wall is detected by the sensors and subsequently an alarm is triggered.

US 2006 / 090 546 A1 discloses a sensor apparatus configured to detect the presence of a gas, such as a tracer gas and a leak detection apparatus configured to detect the present of a tracer gas and indicate the location of a leak. The sensor apparatus includes multiple sensors, each of which is a metal halide sensor. The leak detection apparatus may further be configured to quantify the leak rate at the leak location. There is, however, no indication that leak rates are compared with historical leak data.

CN 106 840 546 A discloses an aircraft fuel oil leak detection system and method. A fuel measurement module gathers aircraft fuel oil data, an engine consumption measurement module gathers consumption data, and timing signal source provides a timing signal. A fuel leakage data processing center judges whether there is a leak based on the gathered data.

US 5 225 812 A discloses a protective composite liner for installation inside a vessel, such as a supertanker, that has an outer layer of high strength fibers, a middle layer of flexible, high strength, resilient film material, and an inner chemical resistant layer. Means for anchoring the protective composite liner and sensor means for detecting a leak are further provided for use with the liner.

It is the object of the invention to improve structural health monitoring apparatus and methods, preferably with respect to their reliability and sensitivity.

The object is achieved by the subject-matter of the independent claims. Preferred embodiments are subject-matter of the dependent claims.

The invention provides a computer implemented method for structural health monitoring of a fluid container that is configured to store fluids, preferably cryogenic fluids, the method comprising:
a) with a plurality of fluid sensors that are distributed around and/or within a structure of the fluid container: measuring a fluid level value of a fluid that emanates from within the fluid container;
b) from a database: retrieving gas leakage data that are indicative of a gas leakage rate of the fluid container; and
c) with a classifier apparatus: classifying a gas leak of the fluid container by determining the gas leak to be a large gas leak, if individual fluid sensors report a gas level value increase above a first threshold determined by the gas leakage data, or determining the gas leak to be a small gas leak, if individual fluid sensors report a gas level value increase below the first threshold but above a second threshold that is non-zero and lower than the first threshold. The method is characterized in that in step c) the classifier apparatus determines the fluid container to have degraded, if a predetermined number or a majority of individual fluid sensors reports a gas level value increase above a third threshold that is derived from the gas leak data.

Preferably, in step a) the fluid sensors are gas sensors and the gas sensors measure a gas level value of a gas that emanates from a fluid within the fluid container.

Preferably, the method further comprises a step: d) generating a leak signal based on the determination in step c), the leak signal being indicative of the type of gas leak and outputting the leak signal in order to cause maintenance or modify a repair plan.

Preferably, in step a) at least one additional fluid sensor measures a fluid level value in the vicinity and outside of the fluid container.

Preferably, in step a) the at least one additional fluid sensor is a gas sensor that measures a gas level value in the vicinity and outside the fluid container.

Preferably, in step a) the fluid sensors are integrated within a structure of the fluid container such as into a wall or double wall of the fluid container. Preferably, the fluid sensor is interposed between a first and second wall of the double wall, preferably in a vacuum. Preferably, the structure of the fluid container comprises a composite laminate structure having a plurality of layers, and the fluid sensors are integrated in different layers of the composite laminate structure, so as to allow monitoring incipient leakage. Preferably, the fluid sensor includes fiber optical gas sensor.

Preferably, in step b) before retrieving the gas leakage data, flight parameters are measured and associated with actual fluid consumption out of the fluid container in order to determine an estimate for fluid consumption. Preferably, the flight parameters include aircraft weight, air speed, altitude, air pressure, or temperature.

Preferably, in step a) with a fluid gauge apparatus: an amount of fluid remaining in the fluid container is measured. Preferably, in step b) a predicted fluid consumption is retrieved from the database. Preferably, the estimated fluid consumption is compared with at least one of the amount of remaining fluid and the predicted fluid consumption, in order to generate an adjustment value for at least one of the flight parameters, the adjustment value being configured to adjust for lost fluid.

Preferably, the fluid container is a liquid hydrogen tank for an aircraft, the fluid is liquid hydrogen, and the gas is hydrogen gas.

The invention provides a structural health monitoring system configured for structural health monitoring of a fluid container that is configured to store fluids, preferably cryogenic fluids, the system comprising:
a) a plurality of fluid sensors that are distributed around and/or within a structure of the fluid container and configured for measuring a fluid level value of a fluid that emanates from within the fluid container;
b) a database that has stored gas leakage data that are indicative of a gas leakage rate of the fluid container; and
c) a classifier apparatus that is configured to retrieve the gas leakage data from the database and for classifying a gas leak of the fluid container by determining the gas leak to be a large gas leak, if individual fluid sensors report a gas level value increase above a first threshold determined by the gas leakage data, or determining the gas leak to be a small gas leak, if individual fluid sensors report a gas level value increase below the first threshold but above a second threshold that is non-zero and lower than the first threshold. The system is characterized in that the classifier apparatus is further configured for determining the fluid container to have degraded, if a predetermined number or a majority of individual fluid sensors reports a gas level value increase above a third threshold that is derived from the gas leak data.

Preferably, the classifier apparatus is further configured for generating a leak signal that is indicative of the type of gas leak and outputting the leak signal in order to cause maintenance or modify a repair plan.

Preferably, the system further comprises at least one additional fluid sensor that is arranged in the vicinity and outside of the fluid container.

Preferably, the fluid sensor is interposed between a first and second wall of the double wall, preferably in a vacuum. Preferably, the structure of the fluid container comprises a composite laminate structure having a plurality of layers, and the fluid sensors are integrated in different layers of the composite laminate structure, so as to allow monitoring incipient leakage. Preferably, the fluid sensor includes fiber optical gas sensor. Preferably, the fluid container has a fluid gauge apparatus configured for measuring an amount of fluid remaining in the fluid container. Preferably, the database includes a predicted fluid consumption. Preferably, the system is configured for comparing an estimated fluid consumption with at least one of the amount of remaining fluid and a predicted fluid consumption, in order to generate an adjustment value for at least one of the flight parameters, the adjustment value being configured to adjust for lost fluid.

Preferably, the fluid container is a liquid hydrogen tank for an aircraft, the fluid is liquid hydrogen, and the gas is hydrogen gas.

The invention provides an aircraft comprising a preferred structural health monitoring system.

The invention provides a computer program that includes instructions that, when executed by a preferred structural health monitoring system, cause the system to perform a preferred method.

The invention provides a data storage having stored thereon a preferred computer program. The ideas disclosed herein can be used as a way to monitor the structural integrity of hydrogen tanks. Picking up structural defects, degradation as well as detecting early risk of leakage Even if planned for aircraft this system will also work on tanks used in other applications. Further the use of the system is also possible for container with another content.

The invention provides the possibility to improve integrated structural health measuring systems in hydrogen tanks. The monitoring of the hydrogen tanks supports the acceptance of new fuels for aircraft in particular by the authorities, airlines and general public. The system can improve the safety level by picking up initial damage or degradation of the monitored fluid tanks at a very early stage. In addition, the system may - by using data analysis in combination with monitoring measurements - pick-up unknown unknowns. The ideas presented herein may help in reducing costs of such fluid (e.g. liquid hydrogen) containers. In addition to tested and proven materials, the safety can be increased by the system. With this, the need for novel and/or expensive materials, expensive manufacturing methods, and high test effort before usage can be at least reduced, if not avoided. Furthermore, aircraft operators are able to reduce maintenance effort, due to the system being capable of replacing the task of manual inspection. This is particularly advantageous, if tanks are difficult to reach and should be inspected by special non-destructive testing (NDT).

As during maintenance and overhaul the tanks might be swapped or replaced, the quality of the newly installed tanks can be checked using the structural health monitoring (SHM) system. Another effect can be that the design of the tank may be further optimized against weight with the help of this system. Furthermore, the system allows a longer usage of the tanks, due to (more or less continuously) monitoring of the tank's integrity.

A fluid sensor is to be used to measure in-situ the hydrogen concentration in the tank wall. With this, the integrity of composite / fiber reinforced plastic (FRP) hydrogen tanks can be checked by detecting incipient leakage.

The hardware part comprises fiber optical sensors embedded in the FRP laminate, preferable at different depths. Such Fiber optical sensors with a cladding changing optical properties with hydrogen concentration are known in the art.

Potential material degradation will start at chemical-physical level or microscopic level and lead to increased diffusion of hydrogen through the FRP tank wall, thus changing the concentration profile over the thickness.

Anomaly detection and trend monitoring can be performed by statistical methods, whereas the ability of fiber optical sensors to also measure additional factors of the diffusion and the degradation processes, like temperature and strain, are advantageous in the analysis. Furthermore the incorporation of physical models using the laws of diffusion are an option.

The fiber optical sensors can be also used for structural health monitoring for damages at a macroscopic level of the tank or its attachment points, as well as for detection of thermal isolation degradation by in-situ temperature monitoring.

It should be noted that while the invention is explained with a liquid hydrogen tank as an example for a fluid container, the ideas presented herein are applicable to most other fluid containers that are able to store fluids or cryogenic fluids.

Embodiments of the invention are described in more detail with reference to the accompanying schematic drawings; therein the Fig. depicts an embodiment of a structural health monitoring system.

The Fig. schematically depicts a structural health monitoring system 10 for a fluid container. The fluid container may be a pressure container, such as a liquid hydrogen tank for an aircraft. The system 10 comprises a plurality of sensors 12. One type of sensor is a gas sensor 14 that is configured to detect hydrogen gas that emanates from the liquid hydrogen stored in the fluid container. The gas sensor 14 is an example for a fluid sensor. The gas sensors 14 are integrated into several layers of a wall of the fluid container. In addition, temperature sensors 16 may be integrated in the wall as well. Furthermore, there can be additional gas sensors 18 that are arranged in the vicinity of the fluid container but outside to monitor the immediate surroundings of the fluid container. The additional gas sensors 18 are an example for additional fluid sensors.

The sensors 12 measure a hydrogen gas level. The location of the sensors 12 is known so the measured hydrogen gas levels can be determined locally. Furthermore, it is possible to detect a hydrogen gradient within the tank wall and temperature changes (either caused by external temperature changes or leaking hydrogen gas). Local temperature changes are also possible due to operation of the fluid container, e.g. by change of fluid level, maintenance, sloshing of the fluid, etc. These gas leakage data are stored in a database 20 for future reference. It should be noted that in the database 20, the gas leak data can be structured so that they are indicative not only for a specific fluid container, but for similar types of fluid containers.

The system 10 further comprises a classifier apparatus 22. The classifier apparatus 22 is configured to classify a gas leak in the wall of the fluid container. The classifier apparatus 22 may do this by comparing the gas leak rate with thresholds that are derived from historic gas leakage data, which are - as previously mentioned - stored in the database 20.

The classifier apparatus 22 determines that the gas leak is a large gas leak 24, if individual gas sensors 14 report a hydrogen gas level value increase above a first threshold. The first threshold is determined by the gas leakage data. Furthermore, the location of the specific sensor 14 reporting the increase can be used to immediately determine an area of the wall of the fluid container that is affected by the leak. The first threshold is preferably set such that it is only exceeded in case of a mandatory repair of the fluid container.

The classifier apparatus 22 determines that the gas leak is a small gas leak 26, if individual gas sensors 14 report a hydrogen gas level value increase that exceeds a second threshold but is below a first threshold. The second threshold is determined by the gas leakage data. Furthermore, the location of the specific sensor 14 can again be used to immediately determine the affected area. The second threshold is preferably set such that operation of the aircraft is still possible, but the gas leak may increase operating costs. The second threshold can define how much gas leakage is acceptable from an economic point of view, while still maintaining operational safety.

The classifier apparatus 22 determines the fluid container to have degradation 28, if the gas sensors 14 globally register an increase of hydrogen gas levels that exceed a third threshold. In this case, there is not an individual leak but rather a general decline in the capability of the tank wall to contain the hydrogen gas.

The first to third thresholds can also be influenced by the current hydrogen price 30 and/or the specific cost 32 of the type of repair that is indicated (large, small, degradation).

In case the classifier apparatus 22 determines the presence of a large or small gas leak, the classifier apparatus 22 may generate a leak signal that can be sent to an automated maintenance system 34 or be used to determine a repair plan. In turn the automated maintenance system 34 may automatically generate a material order 36 for the parts required for the repair.

The system 10 also includes various data sources that include gas leakage data that are relevant for determining the type of gas leakage or intensity of gas leakage. The system 10 may include a shared data source 36 that is shared between aircraft operator and aircraft manufacturer. The gas leakage data and data generated by the automated maintenance system 34 are stored in the shared data source 36. Furthermore, the measurements of the sensors 12, 14, 16, 18 can be transmitted to the shared data storage 36. In addition, the database 20 may extract from or synchronize with the shared data source 36 so as to always include current data.

The system 10 also includes flight parameters 38 as an additional data source. The flight parameters 38, such as aircraft weight, air speed, altitude, air pressure, and (ambient) temperature can also be fed into the database 20 and analyzed with respect to their influence on gas leakage data.

In another prong, the system 10, can be used to infer changes of the flight parameters 38, that allow to reduce or eliminate gas leakage or that allow reduction of wear on the hydrogen tank, thereby increasing its lifetime. After filling the hydrogen tank from a hydrogen source 40, the actual hydrogen consumption 42 and the remaining hydrogen fluid 44 in the fluid container are measured.

The actual hydrogen consumption 42 can be compared by the classifier apparatus 22 to previous hydrogen consumption, that can be retrieved from the database 20. From this, an estimated hydrogen consumption 46 for the remaining flight can be determined. Furthermore, the database 20 can be updated with the new estimate, so that the entire system 10 is continually learning.

The classifier apparatus 22 can then retrieve from the database 20 a predicted hydrogen loss 48 for the remaining flight and compare it to the estimated hydrogen consumption 46 and the remaining hydrogen fluid 44. The predicted hydrogen loss 48 can also be transferred to the hydrogen source 40 in order to give a rough estimate for the hydrogen needed to be transferred into the hydrogen tank. Based on these input parameters, the classifier apparatus 22 determines recommended changes 50 to the flight parameters 38 that allow to reduce or eliminate gas leakage or that allow reduction of wear on the hydrogen tank. The recommended changes 50 can be put on a display 52 in the cockpit for the pilot to review.

In order to improve structural health monitoring apparatus and methods with respect to their reliability and sensitivity as well as improving the use of hydrogen tanks in aircraft, the invention proposes a structural health monitoring system (10) and associated method. Fluid sensors (14, 18) that are distributed around the hydrogen tank measuring a hydrogen gas level value within the walls of the hydrogen tank. From a database (20) gas leakage data that are indicative of a gas leakage rate of the hydrogen tank are retrieved. A classifier apparatus (22) classifies a gas leak of the hydrogen tank into a large and small gas leaks. The gas leak is determined to be a large gas leak (24), if individual fluid sensors (14, 18) report a gas level value increase above a first threshold determined by the gas leakage data. The gas leak is determined to be a small gas leak (26), if individual fluid sensors (14, 18) report a gas level value increase below the first threshold but above a second threshold that is non-zero and lower than the first threshold.

### List of reference signs:

- 10: structural health monitoring system
- 12: sensor
- 14: fluid sensor
- 16: temperature sensor
- 18: additional fluid sensor
- 20: database
- 22: classifier apparatus
- 24: large gas leak
- 26: small gas leak
- 28: degradation
- 30: current hydrogen price
- 32: specific cost
- 34: automated maintenance system
- 35: material order
- 36: shared data source
- 38: flight parameter
- 40: hydrogen source
- 42: hydrogen consumption
- 44: remaining hydrogen fluid
- 46: estimated hydrogen consumption
- 48: predicted hydrogen loss
- 50: recommended changes
- 52: display

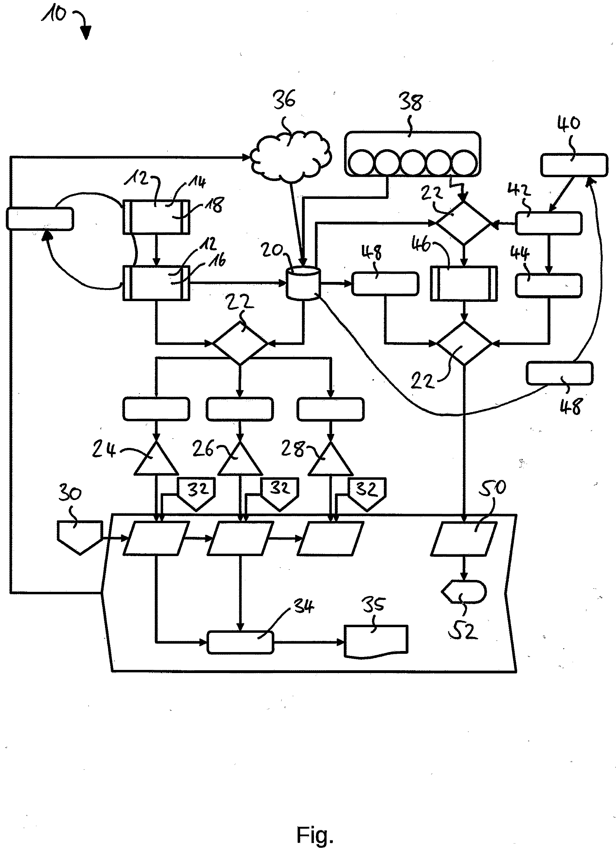

## Claims

1. A computer implemented method for structural health monitoring of a fluid container that is configured to store fluids, the method comprising:
a) with a plurality of fluid sensors (14, 18) that are distributed around and/or within a structure of the fluid container: measuring a gas level value of a gas that emanates from a fluid within the fluid container;
b) from a database (20): retrieving gas leakage data that are indicative of a gas leakage rate of the fluid container; and
c) with a classifier apparatus (22): classifying a gas leak of the fluid container by determining the gas leak to be a large gas leak (24), if individual fluid sensors (14, 18) report a gas level value increase above a first threshold determined by the gas leakage data, or determining the gas leak to be a small gas leak (26), if individual fluid sensors (14, 18) report a gas level value increase below the first threshold but above a second threshold that is non-zero and lower than the first threshold, **characterized in that** in step c) the classifier apparatus (22) determines the fluid container to have degraded, if a predetermined number or a majority of individual fluid sensors (14) reports a gas level value increase above a third threshold that is derived from the gas leak data.

2. The method according to claim 1, further comprising a step: d) generating a leak signal based on the determination in step c), the leak signal being indicative of the type of gas leak and outputting the leak signal in order to cause maintenance or modify a repair plan.

3. The method according to any of the preceding claims, wherein in step a) the fluid sensors (14) are integrated within a structure of the fluid container and/or wherein in step a) at least one additional fluid sensor (18) measures a gas level value in the vicinity and outside of the fluid container.

4. The method according to any of the preceding claims, wherein in step b) before retrieving the gas leakage data, flight parameters (38) are measured and associated with actual fluid consumption out of the fluid container in order to determine an estimate for fluid consumption.

5. The method according to claim 4, wherein in step a) with a fluid gauge apparatus: an amount of fluid remaining in the fluid container is measured and/or in step b) a predicted fluid consumption is retrieved from the database (20), and the estimated fluid consumption is compared with at least one of the amount of remaining fluid and the predicted fluid consumption, in order to generate an adjustment value for at least one of the flight parameters (38), the adjustment value being configured to adjust for lost fluid.

6. The method according to any of the preceding claims, wherein the fluid container is a liquid hydrogen tank for an aircraft, the fluid is liquid hydrogen, and the gas is hydrogen gas.

7. A structural health monitoring system (10) configured for structural health monitoring of a fluid container that is configured to store fluids, the system comprising:
a) a plurality of fluid sensors (14, 18) that are distributed around the fluid container and configured for measuring a gas level value of a gas that emanates from a fluid within the fluid container;
b) a database (20) that has stored gas leakage data that are indicative of a gas leakage rate of the fluid container; and
c) a classifier apparatus (22) that is configured to retrieve the gas leakage data from the database (20) and for classifying a gas leak of the fluid container by determining the gas leak to be a large gas leak (24), if individual fluid sensors (14) report a gas level value increase above a first threshold determined by the gas leakage data, or determining the gas leak to be a small gas leak (26), if individual fluid sensors (14) report a gas level value increase below the first threshold but above a second threshold that is non-zero and lower than the first threshold, **characterized in that** the classifier apparatus is further configured for determining the fluid container to have degraded, if a predetermined number or a majority of individual fluid sensors reports a gas level value increase above a third threshold that is derived from the gas leak data.

8. The system (10) according to claim 7, wherein the classifier apparatus (22) is further configured for generating a leak signal that is indicative of the type of gas leak and outputting the leak signal in order to cause maintenance or modify a repair plan.

9. The system (10) according to any of the claims 7 or 8, further comprising at least one additional fluid sensor (18) that is arranged in the vicinity and outside of the fluid container.

10. The system (10) according to any of the claims 7 to 9, wherein the fluid sensors (14) are integrated within a structure of the fluid container.

11. The system (10) according to claim 10, wherein the structure of the fluid container comprises a composite laminate structure having a plurality of layers, and the fluid sensors (14) are integrated in different layers of the composite laminate structure, so as to allow monitoring incipient leakage.

12. An aircraft comprising a structural health monitoring system (10) according to any of the claims 7 to 11.

13. A computer program that includes instructions that, when executed by a structural health monitoring system (10) according to any of the claims 8 to 11, cause the system to perform a method according any of the claims 1 to 6.

14. A data storage having stored thereon a computer program of claim 13.

## Patentansprüche

1. Computerimplementiertes Verfahren zur Überwachung des strukturellen Zustands eines Flüssigkeitsbehälters, der dazu konfiguriert ist, Flüssigkeiten zu speichern, wobei das Verfahren Folgendes umfasst:
a) mit mehreren Flüssigkeitssensoren (14, 18), die um und/oder innerhalb einer Struktur des Flüssigkeitsbehälters verteilt sind: Messen eines Gaspegelwerts eines Gases, das von einer Flüssigkeit innerhalb des Flüssigkeitsbehälters ausgeht;
b) aus einer Datenbank (20): Abrufen von Gasaustrittsdaten, die eine Gasaustrittsrate des Flüssigkeitsbehälters angeben; und
c) mit einer Klassifizierungseinrichtung (22): Klassifizieren eines Gaslecks des Flüssigkeitsbehälters durch Bestimmen des Gaslecks als ein großes Gasleck (24), falls einzelne Flüssigkeitssensoren (14, 18) einen Gaspegelwertanstieg über einen ersten Schwellenwert melden, der durch die Gasaustrittsdaten bestimmt wird, oder Bestimmen des Gaslecks als ein kleines Gasleck (26), falls einzelne Flüssigkeitssensoren (14, 18) einen Gaspegelwertanstieg unterhalb der ersten Schwelle, jedoch oberhalb einer zweiten Schwelle melden, die ungleich Null und niedriger als die erste Schwelle ist, **dadurch gekennzeichnet, dass** in Schritt c) die Klassifizierungseinrichtung (22) bestimmt, dass sich der Flüssigkeitsbehälter verschlechtert hat, falls eine vorbestimmte Anzahl oder ein Großteil einzelner Flüssigkeitssensoren (14) einen Gaspegelwertanstieg oberhalb einer dritten Schwelle meldet, die aus den Gasleckdaten abgeleitet wird.

2. Verfahren nach Anspruch 1, das ferner einen folgenden Schritt umfasst: d) Erzeugen eines Lecksignals basierend auf der Bestimmung in Schritt c), wobei das Lecksignal die Art des Gaslecks angibt und das Lecksignal ausgibt, um eine Wartung zu bewirken oder einen Reparaturplan zu modifizieren.

3. Verfahren nach einem der vorhergehenden Ansprüche, wobei in Schritt a) die Flüssigkeitssensoren (14) in eine Struktur des Flüssigkeitsbehälters integriert sind und/oder wobei in Schritt a) mindestens ein zusätzlicher Flüssigkeitssensor (18) einen Gaspegelwert in der Nähe und außerhalb des Flüssigkeitsbehälters misst.

4. Verfahren nach einem der vorhergehenden Ansprüche, wobei in Schritt b) vor dem Abrufen der Gasaustrittsdaten Flugparameter (38) gemessen und mit dem tatsächlichen Flüssigkeitsverbrauch aus dem Flüssigkeitsbehälter assoziiert werden, um eine Schätzung des Flüssigkeitsverbrauchs zu bestimmen.

5. Verfahren nach Anspruch 4, wobei in Schritt a) mit einer Flüssigkeitsmesseinrichtung: eine in dem Flüssigkeitsbehälter verbleibende Flüssigkeitsmenge gemessen wird und/oder in Schritt b) ein vorhergesagter Flüssigkeitsverbrauch aus der Datenbank (20) abgerufen wird, und der geschätzte Flüssigkeitsverbrauch mit der Restflüssigkeitsmenge und/oder dem vorhergesagten Flüssigkeitsverbrauch verglichen wird, um einen Anpassungswert für mindestens einen der Flugparameter (38) zu erzeugen, wobei der Anpassungswert dazu konfiguriert ist, sich auf den Flüssigkeitsverlust einzustellen.

6. Verfahren nach einem der vorhergehenden Ansprüche, wobei der Flüssigkeitsbehälter ein Flüssigwasserstofftank für ein Flugzeug ist, die Flüssigkeit Flüssigwasserstoff ist und das Gas Wasserstoffgas ist.

7. Überwachungssystem des strukturellen Zustands (10), das zur Überwachung des strukturellen Zustands eines Flüssigkeitsbehälters konfiguriert ist, der zum Speichern von Flüssigkeiten konfiguriert ist, wobei das System Folgendes umfasst:
a) mehrere Flüssigkeitssensoren (14, 18), die um den Flüssigkeitsbehälter verteilt sind und zum Messen eines Gaspegelwerts eines Gases konfiguriert sind, das von einer Flüssigkeit innerhalb des Flüssigkeitsbehälters ausgeht;
b) eine Datenbank (20), die gespeicherte Gasaustrittsdaten aufweist, die eine Gasaustrittsrate des Flüssigkeitsbehälters angeben; und
c) eine Klassifizierungseinrichtung (22), die dazu konfiguriert ist, die Gasaustrittsdaten aus der Datenbank (20) abzurufen und zum Klassifizieren eines Gaslecks des Flüssigkeitsbehälters durch Bestimmen des Gaslecks als ein großes Gasleck (24), falls einzelne Flüssigkeitssensoren (14) eine Gaspegelwertanhebung über einen ersten Schwellenwert melden, der durch die Gasaustrittsdaten bestimmt wird, oder Bestimmen des Gaslecks als ein kleines Gasleck (26), falls einzelne Flüssigkeitssensoren (14) einen Gaspegelwertanstieg unter dem ersten Schwellenwert, aber über einem zweiten Schwellenwert melden, der nicht Null ist und niedriger als der erste Schwellenwert ist, **dadurch gekennzeichnet, dass** die Klassifizierungseinrichtung ferner dazu konfiguriert ist, zu bestimmen, dass der Flüssigkeitsbehälter sich verschlechtert hat, falls eine vorbestimmte Anzahl oder eine Mehrheit einzelner Flüssigkeitssensoren einen Gaspegelwertanstieg über einen dritten Schwellenwert meldet, der aus den Gasleckdaten abgeleitet wird.

8. System (10) nach Anspruch 7, wobei die Klassifizierungseinrichtung (22) ferner dazu konfiguriert ist, ein Lecksignal zu erzeugen, das die Art des Gaslecks angibt, und das Lecksignal auszugeben, um eine Wartung zu bewirken oder einen Reparaturplan zu modifizieren.

9. System (10) nach einem der Ansprüche 7 oder 8, das ferner mindestens einen zusätzlichen Flüssigkeitssensor (18) umfasst, der in der Nähe und außerhalb des Flüssigkeitsbehälters angeordnet ist.

10. System (10) nach einem der Ansprüche 7 bis 9, wobei die Flüssigkeitssensoren (14) in eine Struktur des Flüssigkeitsbehälters integriert sind.

11. System (10) nach Anspruch 10, wobei die Struktur des Flüssigkeitsbehälters eine Verbundlaminatstruktur mit mehreren Schichten umfasst und die Flüssigkeitssensoren (14) in verschiedenen Schichten der Verbundlaminatstruktur integriert sind, um ein Überwachen eines beginnenden Austritts zu ermöglichen.

12. Luftfahrzeug, das ein Überwachungssystem des strukturellen Zustands (10) nach einem der Ansprüche 7 bis 11 umfasst.

13. Computerprogramm, das Anweisungen beinhaltet, das, wenn es durch ein Überwachungssystem des strukturellen Zustands (10) nach einem der Ansprüche 8 bis 11 ausgeführt wird, bewirkt, dass das System ein Verfahren nach einem der Ansprüche 1 bis 6 durchführt.

14. Datenspeicher, auf dem ein Computerprogramm nach Anspruch 13 gespeichert ist.

## Revendications

1. Procédé mis en œuvre par ordinateur pour surveillance d'état structurel d'un contenant de fluide qui est configuré pour stocker des fluides, le procédé comprenant :
a) avec une pluralité de capteurs de fluide (14, 18) qui sont distribués autour et/ou à l'intérieur d'une structure du contenant de fluide : la mesure d'une valeur de niveau de gaz d'un gaz qui provient d'un fluide à l'intérieur du contenant de fluide ;
b) d'une base de données (20) : la récupération de données de fuite de gaz qui sont indicatives d'un débit de fuite de gaz du contenant de fluide ; et
c) avec un appareil classifieur (22) : la classification d'une fuite de gaz du contenant de fluide en déterminant que la fuite de gaz est une grande fuite de gaz (24) si des capteurs de fluide individuels (14, 18) rapportent une augmentation de valeur de niveau de gaz supérieure à un premier seuil déterminé par les données de fuite de gaz, ou en déterminant que la fuite de gaz est une petite fuite de gaz (26) si des capteurs de fluide individuels (14, 18) rapportent une augmentation de valeur de niveau de gaz inférieure au premier seuil mais supérieure à un deuxième seuil qui est non-zéro et plus bas que le premier seuil, **caractérisé en ce que**, dans l'étape c), l'appareil classifieur (22) détermine que le contenant de fluide s'est dégradé si un nombre prédéterminé ou une majorité de des capteurs de fluide individuels (14) rapportent une augmentation de valeur de niveau de gaz supérieure à un troisième seuil qui est dérivé des données de fuite de gaz.

2. Procédé selon la revendication 1, comprenant en outre une étape : d) la génération d'un signal de fuite sur la base de la détermination dans l'étape c), le signal de fuite étant indicatif du type de fuite de gaz, et la sortie du signal de fuite afin d'entraîner une maintenance ou de modifier un plan de réparation.

3. Procédé selon de quelconques des revendications précédentes, dans lequel, dans l'étape a), les capteurs de fluide (14) sont intégrés à l'intérieur d'une structure du contenant de fluide et/ou dans lequel, dans l'étape a), au moins un capteur de fluide supplémentaire (18) mesure une valeur de niveau de gaz dans le voisinage et à l'extérieur du contenant de fluide.

4. Procédé selon de quelconques des revendications précédentes, dans lequel, dans l'étape b), avant la récupération des données de fuite de gaz, des paramètres de vol (38) sont mesurés et associés à une consommation de fluide réelle hors du contenant de fluide afin de déterminer une estimation pour la consommation de fluide.

5. Procédé selon la revendication 4, dans lequel, dans l'étape a), avec un appareil jauge de fluide : une quantité de fluide restant dans le contenant de fluide est mesurée et/ou, dans l'étape b), une consommation de fluide prédite est récupérée de la base de données (20), et la consommation de fluide estimée est comparée à au moins une de la quantité de restant fluide et de la consommation de fluide prédite, afin de générer une valeur d'ajustement pour au moins un des paramètres de vol (38), la valeur d'ajustement étant configurée pour effectuer un ajustement prenant en compte un fluide perdu.

6. Procédé selon de quelconques des revendications précédentes, dans lequel le contenant de fluide est un réservoir d'hydrogène liquide pour un aéronef, le fluide est de l'hydrogène liquide, et le gaz est de l'hydrogène gazeux.

7. Système de surveillance d'état structurel (10) configuré pour la surveillance d'état structurel d'un contenant de fluide qui est configuré pour stocker des fluides, le système comprenant :
a) une pluralité de capteurs de fluide (14, 18) qui sont distribués autour du contenant de fluide et configurés pour mesurer une valeur de niveau de gaz d'un gaz qui provient d'un fluide à l'intérieur du contenant de fluide ;
b) une base de données (20) qui a stocké des données de fuite de gaz qui sont indicatives d'un débit de fuite de gaz du contenant de fluide ; et
c) un appareil classifieur (22) qui est configuré pour récupérer les données de fuite de gaz de la base de données (20) et pour classifier une fuite de gaz du contenant de fluide en déterminant que la fuite de gaz est une grande fuite de gaz (24) si des capteurs de fluide individuels (14) rapportent une augmentation de valeur de niveau de gaz supérieure à un premier seuil déterminé par les données de fuite de gaz, ou en déterminant que la fuite de gaz est une petite fuite de gaz (26) si des capteurs de fluide individuels (14) rapportent une augmentation de valeur de niveau de gaz inférieure au premier seuil mais supérieure à un deuxième seuil qui est non-zéro et plus bas que le premier seuil, **caractérisé en ce que** l'appareil classifieur est en outre configuré pour déterminer que le contenant de fluide s'est dégradé si un nombre prédéterminé ou une majorité de capteurs de fluide individuels rapportent une augmentation de valeur de niveau de gaz supérieure à un troisième seuil qui est dérivé des données de fuite de gaz.

8. Système (10) selon la revendication 7, dans lequel l'appareil classifieur (22) est en outre configuré pour générer un signal de fuite qui est indicatif du type de fuite de gaz et sortir le signal de fuite afin d'entraîner la maintenance ou modifier un plan de réparation.

9. Système (10) selon de quelconques des revendications 7 ou 8, comprenant en outre au moins un capteur de fluide supplémentaire (18) qui est agencé dans le voisinage et à l'extérieur du contenant de fluide.

10. Système (10) selon de quelconques des revendications 7 à 9, dans lequel les capteurs de fluide (14) sont intégrés à l'intérieur d'une structure du contenant de fluide.

11. Système (10) selon la revendication 10, dans lequel la structure du contenant de fluide comprend une structure stratifiée composite ayant une pluralité de couches, et les capteurs de fluide (14) sont intégrés dans différentes couches de la structure stratifiée composite, afin de permettre la surveillance de fuite qui commence.

12. Aéronef comprenant un système de surveillance d'état structurel (10) selon de quelconques des revendications 7 à 11.

13. Programme d'ordinateur qui inclut des instructions qui, lorsqu'elles sont exécutées par un système de surveillance d'état structurel (10) selon de quelconques des revendications 8 à 11 amènent le système à réaliser un procédé selon de quelconques des revendications 1 à 6.

14. Stockage de données ayant, stocké sur celui-ci, un programme d'ordinateur de la revendication 13.
